# EUROPEAN PATENT APPLICATION

(11) **EP 3 859 521 A1**
(43) Date of publication of application: **04.08.2021**
(21) Application number: 19864022.9
(22) Date of filing: 10.07.2019
(51) Int. Cl.: G06F 9/44

(54) **THEME COLOR ADJUSTING METHOD AND APPARATUS, STORAGE MEDIUM, AND ELECTRONIC DEVICE**

(30) Priority: 29.09.2018 CN 201811151238
(71) Applicant: GUANGDONG OPPO MOBILE TELECOMMUNICATIONS CORP., LTD., Wusha, Chang'an Town Dongguan, Guangdong 523860 (CN)
(72) Inventor: LI, Senlin, Dongguan, Guangdong 523860 (CN)
(74) Representative: Manitz Finsterwald Patent- und Rechtsanwaltspartnerschaft mbB
(86) International application number: PCT/CN2019/095435
(87) International publication number: WO 2020/063030

(57) **Abstract**

Disclosed is a theme color adjusting method, comprising: obtaining and analyzing a currently displayed image to be identified, so as to obtain target color data corresponding to said image; performing similarity matching on the target color data and preset display style data to determine target display style data matched with the target color data; and loading the target display style data to generate a corresponding target theme color, and combining and displaying the target theme color and display information.

## Description

This application claims a priority to Chinese Patent Application No. 201811151238.9, filed on September 29, 2018, titled with "Method and Apparatus for adjusting thematic color, Storage Medium and Electronic Device", the entire content of which is incorporated herein by reference.

### TECHNICAL FIELD

The present disclosure relates to a field of information processing technologies, particularly to a method and an apparatus for adjusting thematic color, a storage medium and an electronic device.

### BACKGROUND

With continuous development of electronic technologies, functions of electronic devices such as mobile phones have become richer and richer. For example, users can obtain information through various applications, such as text information, image information, audio and video information, card information, and so on.

At present, when the card information is obtained through a current application of the mobile phone, the thematic color of the card information may be unchangeable after the card information is displayed and rendered by a rending engine of the application, since display style data of the card information is unchanged. The unchanged thematic color may not match display color of a display interface of the current application running on the foreground, which is required to be manually adjusted by the user. The adjustment process may be cumbersome and the efficiency of adjusting the thematic color may be poor.

### SUMMARY

Embodiments of the present disclosure provide a method and an apparatus for adjusting thematic color, a storage medium and an electronic device, for improving efficiency of adjusting the thematic color.

In a first aspect, embodiments of the present disclosure provide a method for adjusting thematic color. The method includes:
obtaining an image to be identified and currently displayed;
obtaining target color data corresponding to the image to be identified by analyzing the image to be identified;
determining target display style data corresponding to the target color data based on a similarity matching between the target color data and preset display style data; and
generating target thematic color by loading the target display style data, combining the target thematic color and display information, and displaying combined display information.

In a second aspect, embodiments of the present disclosure provide an apparatus for adjusting thematic color. The apparatus includes:
an obtaining unit, configured to obtain an image to be identified and currently displayed;
an analyzing unit, configured to obtain target color data corresponding to the image to be identified by analyzing the image to be identified;
a determining unit, configured to determine target display style data corresponding to the target color data based on a similarity matching between the target color data and preset display style data; and
a combining unit, configured to generate target thematic color by loading the target display style data, combine the target thematic color and display information and display combined display information.

In a third aspect, embodiments of the present disclosure provide a storage medium, having computer instructions stored thereon. When the computer instructions are running on a computer, the computer is caused to implement a method for adjusting thematic color according to any one of the above embodiments.

In a fourth aspect, embodiments of the present disclosure provide an electronic device. The electronic device includes a processor and a memory. By calling the computer instructions stored on the memory, the processor is configured to execute operations of:
obtaining an image to be identified and currently displayed;
obtaining target color data corresponding to the image to be identified by analyzing the image to be identified;
determining target display style data corresponding to the target color data based on a similarity matching between the target color data and preset display style data; and
generating target thematic color by loading the target display style data, combining the target thematic color and display information, and displaying combined display information.

### BRIEF DESCRIPTION OF THE DRAWINGS

Detailed descriptions of implementations of the present application in conjunction with the accompanying drawings will make the technical solutions and beneficial effects of the present application obvious.
FIG. 1 is a schematic diagram illustrating a system architecture for operating an electronic device according to some embodiments of the present disclosure.
FIG. 2 is a schematic flowchart illustrating a method for adjusting thematic color according to some embodiments of the present disclosure.
FIG. 3 is another schematic diagram illustrating a method for adjusting thematic color according to embodiments of the present disclosure.
FIG. 4 is a schematic block diagram illustrating an apparatus for adjusting thematic color according to embodiments of the present disclosure.
FIG. 5 is another schematic block diagram illustrating an apparatus for adjusting thematic color according to embodiments of the present disclosure.
FIG. 6 is a schematic structural diagram illustrating an electronic device according to embodiments of the present disclosure.
FIG. 7 is another schematic diagram illustrating an electronic device according to embodiments of the present disclosure.

### DETAILED DISCLOSURE

In connection with the drawings, the same reference numerals represent the same components. The principle of the present disclosure is illustrated by taking a case of implementation in an appropriate computing environment as an example. The following description is based on the exemplified specific embodiments of the present disclosure, which should not be regarded as limitations of other specific embodiments of the present disclosure that are not described in detail herein.

The term "module" used in the description can be regarded as a software object executed on a computing system. Different components, modules, engines, and services mentioned in the description can be regarded as objects being implemented on the computing system. The device and the method described herein are preferably implemented in the form of software. Of course, the device and the method can also be implemented on hardware, which also falls within the protection scope of the present disclosure.

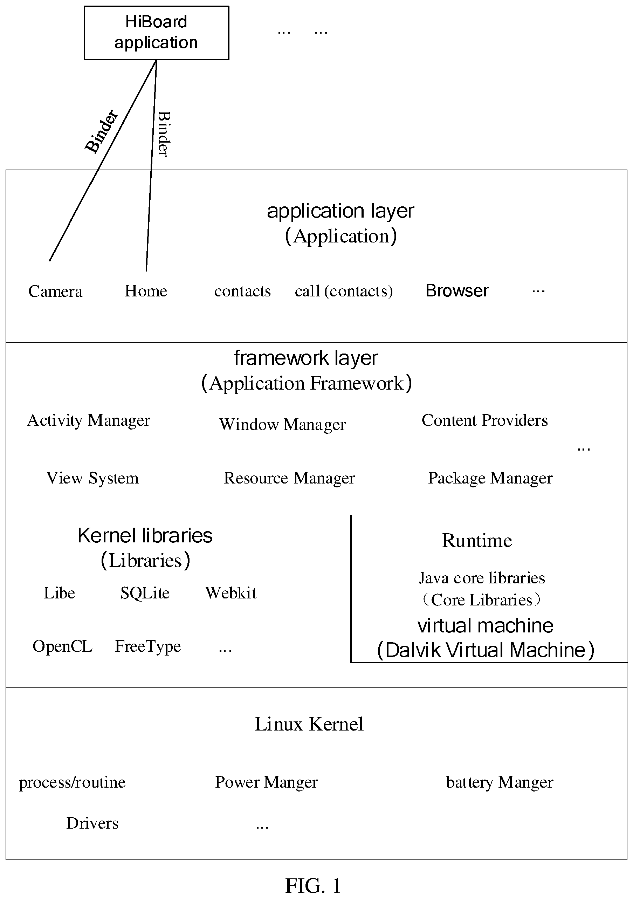

As illustrated in FIG. 1. FIG. 1 is a schematic diagram illustrating a system architecture for operating an electronic device according to embodiments of the present disclosure. The system architecture is an Android system architecture. In an implementation, the system architecture may also be an IOS (iPhone operating system) system architecture, etc. The Android system architecture is an architecture of the Android system. Like the Android operating system, the Android system architecture adopts a layered architecture and is divided into four layers. From high to low, the four layers include Android application layer (Application), Android application framework layer (Application Framework), Android system runtime layer and Linux kernel layer.

The Application layer: applications are programs written in java language and capable of running on virtual machines, such as HiBoard application, camera application, Email application, SMS short message program and calendar. The HiBoard application has powerful functions, and may be used to search for applications of the electronic device and may recommend commonly-used applications on the electronic device.

The application framework layer: this layer is a framework of an Application Programming Interface (API) used for writing core applications released by Google. Developers can also use these frameworks to develop their own applications, which simplifies the structure design of the program development, but the development principles of these framework must be observed.

The system runtime (C/C++ library and Android runtime library) layer: when using the Android application framework, the Android system may support various used components through some C/C++ libraries such as SQLite (relational database), Webkit (web browser engine), so that the Android system can offer better services.

The Linux kernel layer: Android's core system services are based on the Linux 2.6 kernel. For example, security, memory management, process management, network protocol stack and driver model all rely on this kernel, such as Binder IPC (Internet Process Connection, which is an inter-process communication) driver, which is a special driver for the Android system, having a separate device node and providing functions of the inter-process communication.

The display information transferred between different applications, such as the card information transferred between the HiBoard application and a desktop application, requires a Binder communication method to transmit the code information corresponding to the card information across processes. It should be noted that since the display style data in the code information is unchanged, the thematic color of an interface after the card information is read by each application may be unchanged, which may mismatch the display hue of a display interface of an application currently running on the foreground, thereby causing inconvenience to the user. Therefore, it is necessary to provide a method for adjusting thematic color, which can dynamically adjust the thematic color of the card information and allow the adjusted thematic color of the card information to match the display hue of the display interface of the application currently running on the foreground.

Specific analysis and description will be made as below.

In embodiments, descriptions will be made from the perspective of the apparatus for adjusting thematic color. The apparatus for adjusting thematic color may be specifically integrated in an electronic device, such as mobile phones, tablet computers, and PDAs (personal digital assistants).

Embodiments of the present disclosure provides a method for adjusting thematic color. The method may include: obtaining an image to be identified and currently displayed; obtaining target color data corresponding to the image to be identified by analyzing the image to be identified; determining target display style data corresponding to the target color data based on a similarity matching between the target color data and preset display style data; and generating target thematic color by loading the target display style data, combining the target thematic color and display information and displaying combined display information.

In an implementation, obtaining the target color data corresponding to the image to be identified by analyzing the image to be identified may include: calculating first color data of the image to be identified; comparing the first color data with second color data corresponding to each piece of pixel information of the image to be identified to determine target pixel information, in which a color difference corresponding to the target pixel information is greater than a preset threshold; and determining the target color data based on the number of pieces of target pixel information.

In an implementation, calculating the first color data of the image to be identified may include: obtaining RGB image data corresponding to each piece of pixel information of the image to be identified; and calculating averaged values of the RGB image data corresponding to each piece of pixel information and determining the averaged values as the first color data of the image to be identified. Comparing the first color data with second color data corresponding to each piece of pixel information of the image to be identified to determine target pixel information may include: obtaining a Euclidean distance between the first color data and the RGB image data corresponding to each piece of pixel information; and determining pixel information corresponding to the Euclidean distance greater than a preset distance as the target pixel information.

In an implementation, determining the target color data based on the number of pieces of target pixel information may include: determining whether the number of pieces of target pixel information is greater than a preset number; obtaining averaged color values of each piece of target pixel information and determining the averaged color values as the target color data, in response to determining that the number of pieces of target pixel information is greater than the preset number; and determining the first color data as the target color data in response to determining that the number of pieces of target pixel information is not greater than the preset number.

In an implementation, determining the target display style data corresponding to the target color data based on the similarity matching between the target color data and the preset display style data may include: calculating color differences between the target color data and the preset display style data; and determining a piece of preset display style data corresponding to a minimal color difference as the target display style data by comparing the color differences.

In an implementation, obtaining the color differences between the target color data and the preset display style data may include: calculating Euclidean distances between RGB image data contained in the target color data and RGB image data corresponding to cascading style sheets having different colorway styles. Determining the piece of preset display style data corresponding to the minimal color difference as the target display style data by comparing the color differences may include determining a cascading style sheet corresponding to a minimal Euclidean distance as the target display style data by comparing the Euclidean distances.

In an implementation, generating the target thematic color by loading the target display style data, and combining the target thematic color and display information and displaying combined display information may include: generating thematic color by parsing the target display style data through a preset script framework; generating the target thematic color by adjusting the thematic color based on a current ambient light intensity; rendering the display information based on the target thematic color and displaying rendered display information.

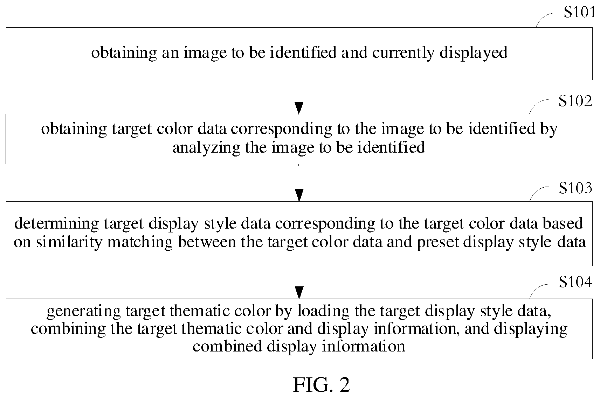

Embodiments of the present disclosure provide a method for adjusting thematic color. As illustrated in FIG. 2, the method for adjusting thematic color may include the following.

At block S101, an image to be identified and currently displayed may be obtained.

It should be noted that a trigger condition for obtaining the image to be identified and currently displayed can refer to triggering to obtain the image when a third-party application running on the foreground receives a display instruction. The display instruction is used for displaying target display information on the third-party application. The target display information can be picture information, text information, card information, and the like. The card information can be a dynamic view component running on the third-party application for simple and intuitive display of information. The third-party application can include a variety of applications, such as browser applications, voice assistant applications, search applications, or HiBoard applications, etc.

When detecting that the display instruction is received by the third-party application, a screenshot of a current display interface of the third-party application currently running on the foreground may be taken, and the screenshot of the current display interface may be determined as the image to be identified and currently displayed. The image to be identified may be an image in RGB (red, green, blue) color mode. The RGB color mode is an industrial color standard. With the RGB color mode, all colors may be obtained by changing values of the red (R) channel, the green (G) channel, and the blue (B) channel, and by superimposing the values of the three color channels with each other, where R, G and B represents the red channel, the green channel, and the blue channel. This standard encompasses almost all colors that human eyes can perceive and is one of the most widely used color systems. The red (R) channel, the green (G) channel and the blue (B) channel each have 256 levels of brightness, represented by numbers 0, 1, 2 to 255. Through calculations, with 256 levels of each of the RGB channels, about 16.78 million kinds of color can be obtained in total.

At block S102, target color data corresponding to the image to be identified may be obtained by analyzing the image to be identified.

RGB color data analysis may be performed on the image to be identified to determine averaged RGB color data of the entire image to be identified. That is, average values of the RGB color data may be obtained by summing up the RGB color data of each piece of pixel information contained in the image to be identified. The average values of the RGB color data may be combined to represent a corresponding color. The average values of the RGB color data may be determined as the target color data corresponding to the image to be identified.

In an implementation, the image to be identified can also be analyzed based on an HSV (hue, saturation, value) color model to obtain the target color data corresponding to the image to be identified. That is, the hue (H), the saturation (S) and the brightness (V) of the image to be identified may be analyzed to obtain target color data by combining averaged hue, averaged saturation, and averaged brightness corresponding to the image to be identified. Various color models may be used, which are not be illustrated here.

In some implementations, obtaining the target color data corresponding to the image to be identified by analyzing the image to be identified may include the following.
(1) First color data of the image to be identified is calculated.
(2) The first color data is compared with second color data corresponding to each piece of pixel information of the image to be identified to determine target pixel information, where a color difference corresponding to the target pixel information is greater than a preset threshold.
(3) The target color data is determined based on the number of pieces of target pixel information.

The RGB color average values of the image to be identified can be calculated, and the RGB color average values may be used as the first color data. It may be easy to understand that the RGB color average values are obtained by comprehensively considering the RGB color data of the entire image to be identified, which may reflect average hue of the entire image to be identified.

Further, the RGB color average values can be compared with the RGB color data corresponding to each piece of pixel information contained in the image to be identified, and the pixel information corresponding to an RGB color data difference that is greater than a preset threshold may be determined as the target pixel information. The target pixel information refers to pixel information of prominent display color. Finally, the target color data may be determined based on the number of pieces of pixel information of prominent display color. When the number of pieces of pixel information of prominent display color is relatively large, more colors may be included. RGB color average values of the pieces of target pixel information can be determined as the target color data. When the number of pieces of pixel information of prominent display color is relatively small, colors may be concentrated. The RGB color average values of the image to be identified can be directly used as the target pixel information. Therefore, the accuracy of the target color data can be improved.

In some implementations, calculating the first color data of the image to be identified may include the following.
(1.1) The RGB image data corresponding to each piece of pixel information contained in the image to be identified is obtained.
(1.2) Average values of the RGB image data of each piece of pixel information are obtained, and the average values are determined as the first color data of the image to be identified.

The RGB image data corresponding to each piece of pixel information contained in the image to be identified can be obtained in an order from top to bottom and from left to right. Color values of the red (R) channels of all pixels may be summed up to calculate the averaged value, color values of the green (G) channels of all pixels may be summed up to calculate the averaged value, and color values of the blue (B) channels of all pixels are summed up to calculate the averaged value, to obtain the averaged values of the RGB image data. The averaged values of the RGB image data may be determined as the first color data of the image to be identified.

Correspondingly, in some implementations, comparing the first color data with the second color data corresponding to each piece of pixel information in the image to be identified to determine the target pixel information corresponding to the color difference greater than the preset threshold may include the following.
(2.1) A Euclidean distance between the RGB image data of each piece of pixel information and the first color data is obtained.
(2.2) The pixel information corresponding to the Euclidean distance greater than a preset distance is determined as the target pixel information.

The Euclidean distance refers to a distance formula between two points x1 and x2 in a N-dimensional Euclidean space. The RGB image data refers to the RGB color data including three sets of data, where the data ranges from 0 to 255. By calculating the Euclidean distance between the RGB image data of each piece of pixel information and the RGB color average values of the image to be identified, the distance therebetween in the 3-dimensional Euclidean space can be obtained. The greater the Euclidean distance, the larger the color difference between the RGB color data of a piece of pixel information and the RGB color data of the image to be identified. The smaller the Euclidean distance, the smaller the color difference between the RGB color data of a piece of pixel information and the RGB color data of the image to be identified.

Further, a suitable distance can be set in advance. The preset distance may be a critical value for determining whether the color difference is high or low. When the Euclidean distance is greater than the preset distance, it indicates that the color difference between the RGB color data of a piece of pixel information and the RGB color data of the image to be identified is relatively large, and this piece of pixel information may be determined as the target pixel information accordingly.

At block S103, based on a similarity matching between the target color data and preset display style data, target display style data matched with the target color data is determined.

The database of the electronic device may have a card color mapping table stored thereon. The card color mapping table may include multiple pieces of preset display style data, which may be cascading style sheets (CSS) having different color styles. The CSS can precisely control the layout of element positions in the display information on a pixel level, support almost all fonts, word sizes, and word styles, and have an ability to edit webpage objects and model styles. Therefore, the similarity match may be performed between the averaged values of RGB color data and the RGB color data corresponding to color styles of each cascading style sheet, and the cascading style sheet corresponding to most similar RGB color data may be determined as the target display style data.

In some implementations, based on the similarity match between the target color data and the preset display style data, determining the target display style data matching the target color data may include the following.
(1) The color differences between the target color data and the preset display style data are calculated
(2) The color differences are compared to determine a piece of preset display style data corresponding to a minimum color difference as the target display style data.

The calculated color difference between the RGB color data in the target color data and the RGB color data corresponding to the color style of a cascading style table, in some implementations, may be the Euclidean distance between the RGB color data in the target color data and the RGB color data corresponding to the color style of the cascading style table. The Euclidean distances may be compared with each other, and the cascading style sheet corresponding to the minimum Euclidean distance may be determined as the target display style data. The the target display style data may include a suitable color style.

At block S104, target thematic color may be generated by loading the target display style data, the target thematic color and the display information may be combined, and combined display information may be displayed.

The cascading style sheet (that is, target display style data) having a matched color style can be loaded through a preset script framework of the third-party application. The preset script framework can be understood as a rendering engine, which can be JavaScript scripting language framework. JavaScript, as a scripting language of the network, has been widely used in web application development and is commonly used to add various dynamic functions to webpages, thereby providing users with smooth and beautiful browsing effects. This JavaScript scripting language framework can render and analyze the cascading style sheets.

Further, after rendering and parsing the cascading style sheets, the target thematic color corresponding to the matched color style may be generated and display information may be generated by a layout code template. The target thematic color may be combined with the display information to complete a drawing process of the thematic color of the display information. The target thematic color drawn on the display information matches the color of the current display interface of the third-party application.

In some implementations, generating the target thematic color by loading the target display style data, combining the target thematic color with the display information, and displaying combined display information may include the following.
(1) The target display style data is parsed through the preset script framework to generate thematic color.
(2) The thematic color is adjusted based on a current ambient light intensity to generate the target thematic color.
(3) The display information is rendered based on the target thematic color and rendered display information is displayed.

The cascading style sheet (that is, target display style data) containing the matched color style can be loaded through the JavaScript scripting language framework of the third-party application to generate thematic color corresponding to the matched color style.

Further, the intensity of the ambient light will affect the user's browsing effect on the display information. When the ambient light intensity is too high, the user will not be able to see the display information on the screen. When the ambient light intensity is too low, the display information will be too glaring to affect the user's browsing effect. In view of the above situations, the electronic device can detect the current ambient light intensity through an ambient light sensor in real time, and adjust the thematic color accordingly based on the current ambient light intensity. In detail, when the ambient light intensity is greater than a first preset threshold, it is indicated that the current ambient light intensity is too large, and the thematic color may be deepened accordingly to generate the target thematic color. When the ambient light intensity is less than a second preset threshold value, where the first preset threshold value is greater than the second preset threshold value, it is indicated that the current ambient light intensity is too low, and the thematic color may be lightened accordingly to generate the target thematic color. When the ambient light intensity is between the first preset threshold and the second preset threshold, it is indicated that the current ambient light intensity is appropriate, and the thematic color can be directly determined as the target thematic color. The target thematic color may be combined with the display information generated by the layout code template to implement the drawing process of the thematic color of the display information. The target thematic color drawn on the display information may match the color of the current display interface of the third-party application, and is adapted to the current ambient light intensity, thereby providing users with a suitable visual experience.

It can be seen from the above that, with the method for adjusting thematic color according to embodiments of the present disclosure, the image to be identified and currently displayed may be obtained. The target color data corresponding to the image to be identified may be obtained by analyzing the image to be identified. The target display style data matching the target color data may be determined based on the similarity matching between the target color data and the preset display style data. The target thematic color may be generated by loading the target display style data, the target thematic color may be combined with the display information, and combined display information may be displayed. In this way, the adapted target thematic color can be dynamically determined based on the color data of the image to be identified and currently displayed, and the display information can be rendered and combined with the target thematic color. Therefore, the adjustment process may be simple and convenient, and the efficiency of adjusting the thematic color may be improved.

The method according to embodiments of the present disclosure will be further described with the following examples.

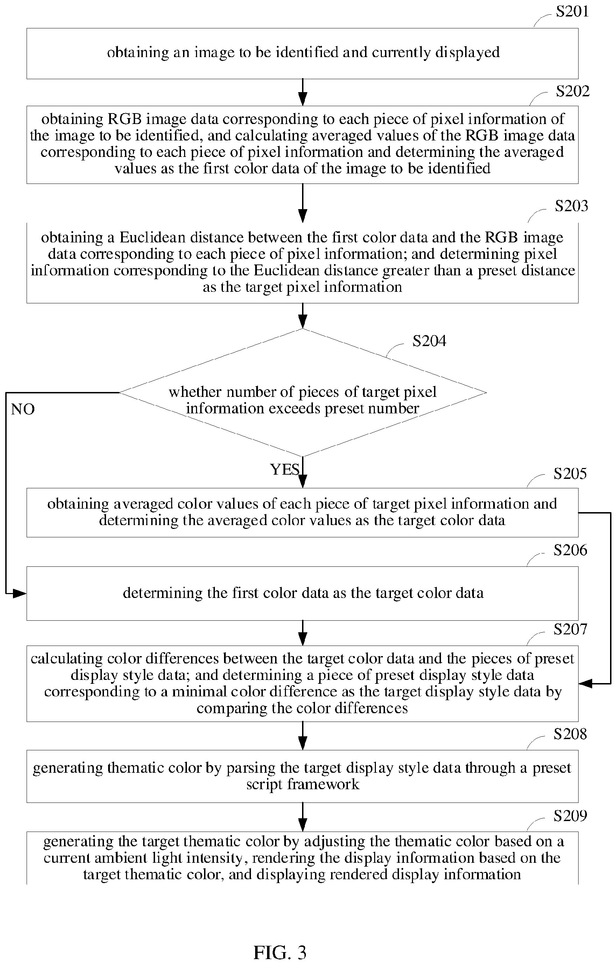

As illustrated in FIG. 3, FIG. 3 is another schematic diagram illustrating a method for adjusting thematic color according to embodiments of the present disclosure.

In detail, the method may include the following.

At block S201, the image to be identified and currently displayed may be obtained.

It should be noted that, in order to well explain embodiments, the electronic device is for example a mobile phone and the display information is for example card information. The card information usually refers to a rectangle containing certain pictures and text information, which may be a controller for accessing more detailed information. Nowadays, while ensuring excellent usability of the interface, the card-like design has even become a default way to balance the aesthetics of the interface. Because the card information conveniently displays that the content in the interface includes different elements, multiple applications can share a common piece of card information. For example, the browser applications, the HiBoard applications, and weather applications can share a piece of card information.

When the third-party application running on the foreground of the mobile phone receives the display instruction, the mobile phone may take a screenshot of the current display interface of the third-party application, and determine the screenshot of the current display interface as the image to be identified. The image to be identified may be an RGB image. That is, the image to be identified is composed of pixels, where each pixel can be represented by respective values of the RGB color data.

At block S202, the RGB image data corresponding to each piece of pixel information contained in the image to be identified may be obtained, the averaged value of the RGB image data of each piece of pixel information may be calculated, and the averaged value may be determined as the first color data of the image to be identified.

The mobile phone may obtain the RGB image data corresponding to each piece of pixel information in the image to be recognized. The RGB image data corresponding to each piece of pixel information includes the color value X of the red (R) channel, the color value Y of the green (G) channel, and the color value Z of the blue (B) channel. The color values X of the R channels of all pixels, the color values Y of the G channels of all pixels, and the color values Z of the B channels of all pixels are summed up to obtain a sum of X, a sum of Y and a sum of Z. The sum of X, the sum of Y, and the sum of Z are respectively divided by the number of pieces of pixel information to obtain an averaged value of X, an averaged value of Y, and an averaged value of Z. The averaged values of X, Y and Z are determined as the first color data of the image to be identified. The first color data can reflect the color of the image to be identified. For example, when the averaged values of X, Y and Z are respectively 255, 192, and 203, the color may be reflected as pink.

At block S203, the Euclidean distance between the RGB image data of each piece of pixel information and the first color data may be calculated, and the pixel information corresponding to the Euclidean distance greater than the preset distance may be determined as the target pixel information.

The mobile phone may calculate the square value of the difference between the color value X of the R channel in the RGB image data corresponding to a piece of pixel information and the averaged value of X, the square value of the difference between the color value Y of the G channel and the averaged value of Y, and the square value of the difference between the color value Z of the B channel and the averaged value of Z. Three square values are summed and obtain a square root of the sum to obtain the Euclidean distance between the RGB image data of each piece of pixel information and the first color data.

Further, the smaller the Euclidean distance, the smaller the color difference between the pixel information and the averaged value. The larger the Euclidean distance, the greater the color difference between the pixel information and the average value. The preset distance is a critical value for determining the color difference. When the Euclidean distance is greater than the preset distance, it may indicate that the color difference exceeds a certain value and the pixel information has prominent color. By analogy, the pixel information corresponding the Euclidean distance greater than the preset distance may be determined as the target pixel information.

At block S204, it may be determined whether the number of pieces of target pixel information exceeds a preset number.

The preset number can be a corresponding proportion of the total number of pieces of pixel information. For example, when there are 100 pieces of pixel information, the preset number can be 20, which is one-fifth of the total number of pieces of pixel information. When the mobile phone determines that the number of pieces of target pixel information exceeds the preset number, a block S205 may be executed. When the mobile phone determines that the number of pieces of target pixel information does not exceed the preset number, a block S206 may be executed.

At block S205, the color averaged value of each piece of target pixel information may be calculated, and the color averaged value may be determined as the target color data.

When the mobile phone determines that the number of pieces of target pixel information exceeds the preset number, it indicates that the image to be identified may include more colors and the color contrast is large. Therefore, it is necessary to calculate the color averaged value of all pieces of target pixel information corresponding to the Euclidean distance exceeding the preset distance. The calculation process is to sum up the value of the R channel corresponding to each piece of target pixel information to calculate the averaged value, sum up the value of the G channel corresponding to each piece of target pixel information to calculate the averaged value, and sum up the value of the B channel corresponding to each piece of target pixel information to calculate the averaged value. The color averaged value may be determined as the target color data.

At block S206, the first color data may be determined as the target color data.

When the mobile phone determines that the number of pieces of target pixel information does not exceed the preset number, it indicates that the colors of the image to be identified are relatively concentrated and the color contrast is small. Therefore, the first color data can be directly determined as the target color data.

At block S207, the color differences between the target color data and the preset display style data may be calculated. A piece of preset display style data corresponding to a minimum color difference may be determined as the target display style data by comparing the color differences.

The database of the mobile phone may have multiple pieces of preset display style data stored thereon. Each piece of preset display style data may include the RGB image data, representing a theme of a corresponding color style. Therefore, the Euclidean distance between the RGB image data of the target color data and the RGB image data corresponding to each piece of preset display style data may be calculated. The preset display style data corresponding to the smallest Euclidean distance may be determined as the target display style data. The color style of the target display style data is closest to the current display interface of the third-party application.

At block S208, the target display style data may be analyzed through the preset script framework to generate thematic color.

The mobile phone may parse the target display style data through the preset JavaScript scripting language framework to generate the thematic color of corresponding color scheme.

At block S209, the thematic color may be adjusted correspondingly based on the current ambient light intensity to generate target thematic color, the display information may be rendered based on the target thematic color, and rendered display information may be displayed.

The mobile phone may detect the ambient light intensity through an ambient light sensor in real time. When the ambient light intensity is greater than the first preset threshold, it indicates that the current ambient light intensity is too high, and the thematic color may be deepened accordingly to generate the target thematic color. When the ambient light intensity is less than the second preset threshold value, where the first preset threshold is greater than the second preset threshold, it indicates that the current ambient light intensity is too low, and the thematic color may be lightened accordingly to generate the target thematic color. When the ambient light intensity is between the first preset threshold and the second preset threshold, it indicates that the current ambient light intensity is appropriate, and the thematic color can be directly determined as the target thematic color. The mobile phone may combine the target thematic color with the display information generated by the layout code template, to implement the color drawing process of the display information and display the drawn display information on the third-party application.

It can be seen from the above with the method for adjusting thematic color according to embodiments, the image to be identified and currently displayed may be obtained. The averaged values of the RGB image data corresponding to each piece of pixel information of the image to be identified may be calculated, and the averaged values may be determined as the first color data. The pixel information corresponding to the Euclidean distance between the RGB image data of the pixel information and the first color data greater than the preset distance may be determined as the target pixel information. The target display style data of closest color may be determined based on the target color data. The thematic color may be generated by loading the target display style data. The target thematic color may be obtained by adjusting the thematic color based on the ambient light. The target thematic color may be combined with the display information, and combined display information may be displayed. In this way, the adapted target thematic color can be dynamically determined based on the color data of the image to be identified and currently displayed, and the display information can be rendered and combined with the target thematic color. The adjustment process may be simple and convenient, and the efficiency of adjusting the thematic color may be improved.

In order to implement the method for adjusting thematic color according to embodiments of the present disclosure, embodiments of the present disclosure further provide an apparatus for adjusting thematic color based on the above method. Meanings of terms used herein are the same as those in the above-mentioned method for adjusting thematic color, which may refer to the details of the description in the method embodiments.

Embodiments of the present disclosure provides an apparatus for adjusting thematic color. The apparatus includes an obtaining unit, an analyzing unit, a determining unit, and a combining unit.

The obtaining unit may be configured to obtain an image to be identified and currently displayed.

The analyzing unit may be configured to obtain target color data corresponding to the image to be identified by analyzing the image to be identified.

The determining unit may be configured to determine target display style data corresponding to the target color data based on a similarity matching between the target color data and preset display style data.

The combining unit may be configured to generate target thematic color by loading the target display style data, combine the target thematic color and display information and display combined display information.

In an implementation, the analyzing unit may include a calculating subunit, a comparing subunit, and a determining subunit. The calculating subunit may be configured to calculate first color data of the image to be identified. The comparing subunit may be configured to compare the first color data with second color data corresponding to each piece of pixel information of the image to be identified to determine target pixel information, where a color difference corresponding to the target pixel information is greater than a preset threshold. The determining subunit may be configured to determine the target color data based on the number of pieces of target pixel information.

In an implementation, the calculating subunit may be further configured to: obtain RGB image data corresponding to each piece of pixel information of the image to be identified; and calculate averaged values of the RGB image data corresponding to each piece of pixel information and determine the averaged values as the first color data of the image to be identified. The comparing subunit may be further configured to: obtain a Euclidean distance between the first color data and the RGB image data corresponding to each piece of pixel information; and determine pixel information corresponding to the Euclidean distance greater than a preset distance as the target pixel information.

In an implementation, the determining subunit may be further configured to: determine whether the number of pieces of target pixel information is greater than a preset number; obtain averaged color values of each piece of target pixel information and determine the averaged color values as the target color data, in response to determining that the number of pieces of target pixel information is greater than the preset number; and determine the first color data as the target color data in response to determining that the number of pieces of target pixel information is not greater than the preset number.

In an implementation, the determining unit is further configured to: calculate color differences between the target color data and the preset display style data; and determine a piece of preset display style data corresponding to a minimal color difference as the target display style data by comparing the color differences.

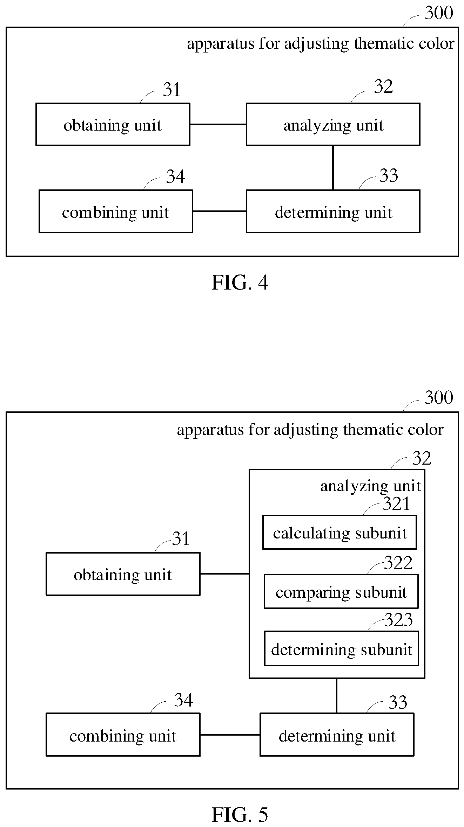

As illustrated in FIG. 4, FIG. 4 is a schematic block diagram illustrating an apparatus for adjusting thematic color according to embodiments of the present disclosure. In detail, the apparatus 300 for adjusting thematic color may include: an obtaining unit 31, an analyzing unit 32, a determining unit 33, and a combining unit 34.

The obtaining unit 31 may be configured to obtain an image to be identified and currently displayed.

When the obtaining unit 31 detects that a display instruction is received by the third-party application, a screenshot of a current display interface of the third-party application currently running on the foreground may be taken, and the screenshot of the current display interface may be determined as the image to be identified and currently displayed. The image to be identified may be an image in RGB (red, green, blue) color mode.

The analyzing unit 32 may be configured to analyze the image to be identified to obtain target color data corresponding to the image to be identified.

The analyzing unit 32 may be configured to analyze the RGB color data of the image to be identified to determine averaged RGB color data of the entire image to be identified. That is, average values of the RGB color data may be obtained by summing up the RGB color data of each piece of pixel information contained in the image to be identified. The average values of the RGB color data may be combined to represent a corresponding color. The average values of the RGB color data may be determined as the target color data corresponding to the image to be identified.

In an implementation, the analyzing unit 32 may be further configured to analyze the image to be identified based on an HSV (hue, saturation, value) color model to obtain the target color data corresponding to the image to be identified. That is, the hue (H), the saturation (S) and the brightness (V) of the image to be identified may be analyzed to obtain target color data by combining averaged hue, averaged saturation, and averaged brightness corresponding to the image to be identified. Various color models may be used, which are not be illustrated here.

In some implementations, the analyzing unit 32 may be further configured to calculate first color data of the image to be identified; compare the first color data with second color data corresponding to each piece of pixel information of the image to be identified to determine target pixel information, where a color difference corresponding to the target pixel information is greater than a preset threshold; and determine the target color data based on the number of pieces of target pixel information.

In some implementations, the analyzing unit 32 may be further configured to obtain the RGB image data corresponding to each piece of pixel information contained in the image to be identified; calculate average values of the RGB image data of each piece of pixel information and determine the average values as the first color data of the image to be identified; calculate a Euclidean distance between the RGB image data of each piece of pixel information and the first color data; determine the pixel information corresponding to the Euclidean distance greater than a preset distance as the target pixel information; and determine the target color data based on the number of pieces of target pixel information.

The determining unit 33 may be configured to, based on a similarity matching between the target color data and preset display style data, determine the target display style data matching the target color data.

The database of the electronic device may have a card color mapping table stored thereon. The card color mapping table may include multiple pieces of preset display style data, which may be cascading style sheets (CSS) having different color styles. The CSS can precisely control the layout of element positions in the display information on a pixel level, support almost all fonts, word sizes, and word styles, and have an ability to edit webpage objects and model styles. Therefore, the determining unit 33 may be configured to perform the similarity match between the averaged values of RGB color data and the RGB color data corresponding to color styles of each cascading style sheet, and determine the cascading style sheet corresponding to most similar RGB color data as the target display style data.

In some implementations, the determining unit 33 may be further configured to calculate the color differences between the target color data and the preset display style data; and compare the color differences to determine a piece of preset display style data corresponding to a minimum color difference as the target display style data.

The combining unit 34 may be configured to generate target thematic color by loading the target display style data, combine and the target thematic color and the display information, and display combined display information.

The combining unit 34 may be configured to load a cascading style sheet (that is, target display style data) containing an adapted color style through a preset script framework of a third-party application. The preset script framework can be understood as a rendering engine, which can be JavaScript scripting language framework.

Further, after rendering and parsing the cascading style sheets, the combining unit may be further configured to generate the target thematic color corresponding to the matched color style and generate display information by a layout code template. The target thematic color may be combined with the display information to complete a drawing process of the thematic color of the display information. The target thematic color drawn on the display information matches the color of the current display interface of the third-party application.

In some implementations, the combining unit 34 may be configured to parse the target display style data through the preset script framework to generate thematic color; adjust the thematic color based on a current ambient light intensity to generate the target thematic color; render the display information based on the target thematic color, and display rendered display information.

As illustrated in FIG. 5, FIG. 5 is another schematic block diagram illustrating an apparatus for adjusting thematic color according to embodiments of the present disclosure. The apparatus 300 for adjusting thematic color may further include the following.

The analyzing unit 32 may include a calculating subunit 321, a comparing subunit 322, and a determining subunit 323.

Further, the calculating subunit 321 may be configured to calculate first color data of the image to be identified. The comparing subunit 322 may be configured to compare the first color data with second color data corresponding to each piece of pixel information of the image to be identified to determine target pixel information, in which a color difference corresponding to the target pixel information is greater than a preset threshold. The determining subunit 323 may be configured to determine the target color data based on the number of pieces of target pixel information.

It can be seen from the above that, with the apparatus for adjusting thematic color according to embodiments of the present disclosure, the image to be identified and currently displayed may be obtained by the obtaining unit 31. The target color data corresponding to the image to be identified may be obtained by the analyzing unit 32 by analyzing the image to be identified. The target display style data matching the target color data may be determined by the determining unit 33 based on the similarity matching between the target color data and the preset display style data. The target thematic color may be generated by the combining unit 34 by loading the target display style data, the target thematic color may be combined with the display information, and the combined display information may be displayed. In this way, the adapted target thematic color can be dynamically determined based on the color data of the image to be identified and currently displayed, and the display information can be rendered and combined with the target thematic color. Therefore, the adjustment process may be simple and convenient, and the efficiency of adjusting the thematic color may be improved.

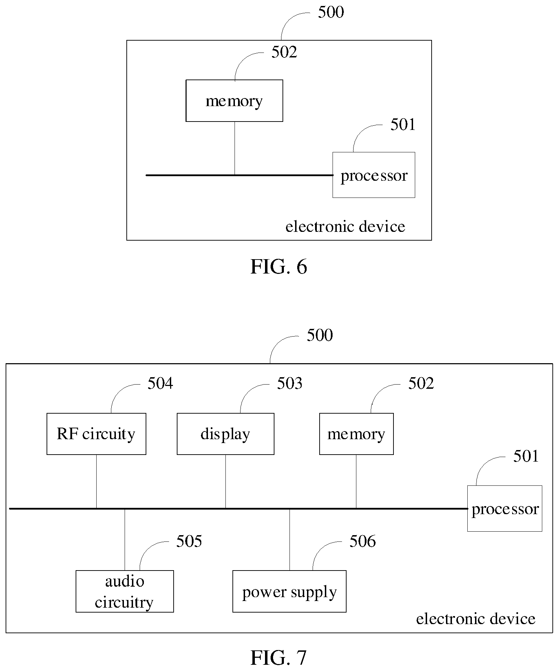

Embodiments of the present disclosure further provide an electronic device. As illustrated in FIG. 6, the electronic device 500 may include a processor 501 and a memory 502. The processor 501 and the memory 502 may be electrically connected.

The processor 500 is the control center of the electronic device 500. The processor 500 may connect to various parts of the electronic device with various interfaces and wires. Various functions and data processing of the electronic device 500 may be executed by running or loading the computer program stored on the memory 502 and calling the data stored in the memory 502, thereby performing overall monitoring of the electronic device 500.

The memory 502 may be configured to store software programs and modules. The processor 501 may be configured to execute various functional applications and data processing by running the computer programs and modules stored in the memory 502. The memory 502 may mainly include a program storage area and a data storage area. The program storage area may store an operating system, computer programs required by at least one function (such as a sound playback function, an image playback function), data created by using electronic device and the like. In addition, the memory 502 may include a high-speed random-access memory, and a non-volatile memory, such as at least one magnetic disk storage device, a flash memory device, or other volatile solid-state storage devices. Correspondingly, the memory 502 may further include a memory controller to provide the processor 501 with access to the memory 502.

In embodiments of the present disclosure, the processor 501 of the electronic device 500 may load the instructions corresponding to the process of one or more computer programs into the memory 502 according to the followings, and the processor 501 may run the instructions stored in the memory 502 in order to realize various functions.

An image to be identified and currently displayed is obtained.

Target color data corresponding to the image to be identified is obtained by analyzing the image to be identified.

Target display style data corresponding to the target color data is determined based on a similarity matching between the target color data and preset display style data.

Target thematic color is generated by loading the target display style data, the target thematic color and display information are combined, and the combined display information is displayed.

In some implementations, when obtaining the target color data corresponding to the image to be identified by analyzing the image to be identified, the processor 501 may be configured to: calculate first color data of the image to be identified; compare the first color data with second color data corresponding to each piece of pixel information of the image to be identified to determine target pixel information, where a color difference corresponding to the target pixel information is greater than a preset threshold; and determine the target color data based on the number of pieces of target pixel information.

In some implementations, when calculating the first color data of the image to be identified, the processor 501 may be further configured to: obtain RGB image data corresponding to each piece of pixel information of the image to be identified; and calculate averaged values of the RGB image data corresponding to each piece of pixel information and determine the averaged values as the first color data of the image to be identified. Comparing the first color data with second color data corresponding to each piece of pixel information of the image to be identified to determine target pixel information may include: obtaining a Euclidean distance between the first color data and the RGB image data corresponding to each piece of pixel information; and determining pixel information corresponding to the Euclidean distance greater than a preset distance as the target pixel information.

In some implementations, when determining the target color data based on the number of pieces of target pixel information, the processor 501 may be configured to: determine whether the number of pieces of target pixel information is greater than a preset number; obtain averaged color values of each piece of target pixel information and determine the averaged color values as the target color data, in response to determining that the number of pieces of target pixel information is greater than the preset number; and determine the first color data as the target color data in response to determining that the number of pieces of target pixel information is not greater than the preset number.

In some implementations, when determining the target display style data corresponding to the target color data based on the similarity matching between the target color data and the preset display style data, the processor 501 may be further configured to: calculate color differences between the target color data and the preset display style data; and determine a piece of preset display style data corresponding to a minimal color difference as the target display style data by comparing the color differences.

In some implementations, when obtaining the color differences between the target color data and the preset display style data, the processor 501 may be further configured to: calculate Euclidean distances between RGB image data contained in the target color data and RGB image data corresponding to different color styles of cascading style sheets. Determining the piece of preset display style data corresponding to the minimal color difference as the target display style data by comparing the color differences may include: determining a cascading style sheet corresponding to a minimal Euclidean distance as the target display style data by comparing the Euclidean distances.

In some implementations, when generating the target thematic color by loading the target display style data, combining the target thematic color and display information, and displaying combined display information, the processor 501 may be further configured to: generate thematic color by parsing the target display style data through a preset script framework; generate the target thematic color by adjusting the thematic color based on a current ambient light intensity; render the display information based on the target thematic color and display rendered display information.

It can be seen from the above that, with the electronic device according to embodiments of the present disclosure, the image to be identified and currently displayed may be obtained. The target color data corresponding to the image to be identified may be obtained by analyzing the image to be identified. The target display style data matching the target color data may be determined based on the similarity matching between the target color data and the preset display style data. The target thematic color may be generated by loading the target display style data, the target thematic color may be combined with the display information, and combined display information may be displayed. In this way, the adapted target thematic color can be dynamically determined based on the color data of the image to be identified and currently displayed, and the display information can be rendered and combined with the target thematic color. Therefore, the adjustment process may be simple and convenient, and the efficiency of adjusting the thematic color may be improved.

As illustrated in FIG. 7, in some implementations, the electronic device 500 may further include: a display 503, a radio frequency circuity 504, an audio circuity 505, and a power supply 506. The display 503, the radio frequency circuity 504, the audio circuity 505, and the power supply 506 are electrically connected to the processor 501 respectively.

The display 503 may be configured to display information input by the user or information provided to the user, and various graphical user interfaces. These graphical user interfaces may be composed of graphics, text, icons, videos, and any combination thereof. The display 503 may include a display panel. In some embodiments, the display panel may be configured in the form of a liquid crystal display (LCD) or an organic light-emitting diode (OLED).

The radio frequency circuity 504 can be configured to send and receive radio frequency signals to establish wireless communication with network equipment or other electronic equipment through wireless communication, and to send and receive signals to and from the network equipment or other electronic equipment.

The audio circuity 505 can be configured to provide an audio interface between the user and the electronic device through a speaker or a microphone.

The power supply 506 can be configured to power various components of the electronic device 500. In some embodiments, the power supply 506 may be logically connected to the processor 501 through a power management system, so that functions such as charging, discharging, and power consumption management can be managed through the power management system.

Although not illustrated in FIG. 7, the electronic device 500 may also include a camera, a Bluetooth module, etc., which are not be repeated here.

Embodiments of the present disclosure further provide a storage medium. The storage medium has computer programs stored thereon. When the computer programs are executed by the computer, the computer may be caused to execute a method for adjusting thematic color according to any one of the above embodiments. For example, the method includes: obtaining an image to be identified and currently displayed; obtaining target color data corresponding to the image to be identified by analyzing the image to be identified; determining target display style data corresponding to the target color data based on a similarity matching between the target color data and preset display style data; and generating target thematic color by loading the target display style data, combining the target thematic color and display information, and displaying combined display information.

In embodiments of the present disclosure, the storage medium may be a magnetic disk, an optical disk, a read only memory (ROM), or a random-access memory (RAM), etc.

In the above-mentioned embodiments, different emphasizes are made on descriptions of each embodiment. For parts that are not described in detail in embodiments, reference may be made to related descriptions of other embodiments.

It should be noted that for the method for adjusting thematic color according to embodiments of the present disclosure, the ordinary skilled in the art can understand that all or part of the process of implementing the method for adjusting thematic color according to embodiments of the present disclosure can be controlled by computer programs. The computer programs may be stored in a computer readable storage medium, such as the memory of an electronic device, and executed by at least one processor of the electronic device. The processing may include flows of embodiments of the method for adjusting thematic color. The storage medium can be a magnetic disk, an optical disk, a read only memory, a random-access memory, etc.

For the apparatus for adjusting thematic color according to embodiments of the present disclosure, functional modules may be integrated in one processing chip, or each module may exist alone physically, or two or more modules may be integrated in one module. The above-mentioned integrated modules can be implemented in the form of hardware or software functional modules. If the integrated module is implemented in the form of a software function module and sold or used as an independent product, it can also be stored in a computer readable storage medium, such as a read only memory, a magnetic disk, or an optical disk.

The method and the apparatus for adjusting thematic color, the storage medium and the electronic device according to embodiments of the present disclosure are described. Specific examples are used in the present disclosure to illustrate the principles and implementation manners of the present disclosure. The description is only used to help understand the method and core idea of the present disclosure. Meanwhile, for those skilled in the art, according to the idea of the present disclosure, changes may be made to the specific implementation and the scope of the present disclosure. The content of the description should not be construed as a limitation on the present disclosure.

## Claims

1. A method for adjusting thematic color, comprising:
obtaining an image to be identified and currently displayed;
obtaining target color data corresponding to the image to be identified by analyzing the image to be identified;
determining target display style data corresponding to the target color data based on a similarity matching between the target color data and preset display style data; and
generating target thematic color by loading the target display style data, combining the target thematic color and display information, and displaying combined display information.

2. The method of claim 1, wherein obtaining the target color data corresponding to the image to be identified by analyzing the image to be identified comprises:
calculating first color data of the image to be identified;
comparing the first color data with second color data corresponding to each piece of pixel information of the image to be identified to determine target pixel information, wherein a color difference corresponding to the target pixel information is greater than a preset threshold; and
determining the target color data based on the number of pieces of target pixel information.

3. The method of claim 2, wherein calculating the first color data of the image to be identified comprises:
obtaining RGB image data corresponding to each piece of pixel information of the image to be identified; and
calculating averaged values of the RGB image data corresponding to each piece of pixel information and determining the averaged values as the first color data of the image to be identified;
wherein comparing the first color data with second color data corresponding to each piece of pixel information of the image to be identified to determine target pixel information comprises:
obtaining a Euclidean distance between the first color data and the RGB image data corresponding to each piece of pixel information; and
determining pixel information corresponding to the Euclidean distance greater than a preset distance as the target pixel information.

4. The method of claim 2, wherein determining the target color data based on the number of pieces of target pixel information comprises:
determining whether the number of pieces of target pixel information is greater than a preset number;
obtaining averaged color values of each piece of target pixel information and determining the averaged color values as the target color data, in response to determining that the number of pieces of target pixel information is greater than the preset number; and
determining the first color data as the target color data in response to determining that the number of pieces of target pixel information is not greater than the preset number.

5. The method of claim 1, wherein determining the target display style data corresponding to the target color data based on the similarity matching between the target color data and the preset display style data comprises:
calculating color differences between the target color data and the preset display style data; and
determining a piece of preset display style data corresponding to a minimal color difference as the target display style data by comparing the color differences.

6. The method of claim 5, wherein calculating the color differences between the target color data and the preset display style data comprises:
calculating Euclidean distances between RGB image data contained in the target color data and RGB image data corresponding to different color styles of cascading style sheets;
wherein determining the piece of preset display style data corresponding to the minimal color difference as the target display style data by comparing the color differences comprises:
determining a cascading style sheet corresponding to a minimal Euclidean distance as the target display style data by comparing the Euclidean distances.

7. The method of claim 1, wherein generating the target thematic color by loading the target display style data, combining the target thematic color and display information, and displaying the combined display information comprises:
generating thematic color by parsing the target display style data through a preset script framework;
generating the target thematic color by adjusting the thematic color based on a current ambient light intensity; and
rendering the display information based on the target thematic color, and displaying rendered display information.

8. An apparatus for adjusting thematic color, comprising:
an obtaining unit, configured to obtain an image to be identified and currently displayed;
an analyzing unit, configured to obtain target color data corresponding to the image to be identified by analyzing the image to be identified;
a determining unit, configured to determine target display style data corresponding to the target color data based on a similarity matching between the target color data and preset display style data; and
a combining unit, configured to generate target thematic color by loading the target display style data, combine the target thematic color and display information, and display combined display information.

9. The apparatus of claim 8, wherein the analyzing unit comprises:
a calculating subunit, configured to calculate first color data of the image to be identified;
a comparing subunit, configured to compare the first color data with second color data corresponding to each piece of pixel information of the image to be identified to determine target pixel information, wherein a color difference corresponding to the target pixel information is greater than a preset threshold; and
a determining subunit, configured to determine the target color data based on the number of pieces of target pixel information.

10. The apparatus of claim 9, wherein the calculating subunit is further configured to:
obtain RGB image data corresponding to each piece of pixel information of the image to be identified; and
calculate averaged values of the RGB image data corresponding to each piece of pixel information and determine the averaged values as the first color data of the image to be identified;
wherein the comparing subunit is further configured to:
obtain a Euclidean distance between the first color data and the RGB image data corresponding to each piece of pixel information; and
determine pixel information corresponding to the Euclidean distance greater than a preset distance as the target pixel information.

11. The apparatus of claim 9, wherein the determining subunit is further configured to:
determine whether the number of pieces of target pixel information is greater than a preset number;
obtain averaged color values of each piece of target pixel information and determine the averaged color values as the target color data, in response to determining that the number of pieces of target pixel information is greater than the preset number; and
determine the first color data as the target color data in response to determining that the number of pieces of target pixel information is not greater than the preset number.

12. The apparatus of claim 8, wherein the determining unit is further configured to:
calculate color differences between the target color data and the preset display style data; and
determine a piece of preset display style data corresponding to a minimal color difference as the target display style data by comparing the color differences.

13. A storage medium, having computer instructions stored thereon, wherein when the computer instructions are executed by a computer, the computer is caused to implement a method for adjusting thematic color of claim 1.

14. An electronic device, comprising a memory and a processor, wherein the processor is configured to call computer instructions stored in the memory to implement operations of:
obtaining an image to be identified and currently displayed;
obtaining target color data corresponding to the image to be identified by analyzing the image to be identified;
determining target display style data corresponding to the target color data based on a similarity matching between the target color data and preset display style data; and
generating target thematic color by loading the target display style data, combining the target thematic color and display information, and displaying combined display information.

15. The electronic device of claim 14, wherein the processor is further configured to call the computer instructions to implement operations of:
calculating first color data of the image to be identified;
comparing the first color data with second color data corresponding to each piece of pixel information of the image to be identified to determine target pixel information, wherein a color difference corresponding to the target pixel information is greater than a preset threshold; and
determining the target color data based on the number of pieces of target pixel information.

16. The electronic device of claim 15, wherein the processor is further configured to call the computer instructions to implement operations of:
obtaining RGB image data corresponding to each piece of pixel information of the image to be identified; and
calculating averaged values of the RGB image data corresponding to each piece of pixel information and determining the averaged values as the first color data of the image to be identified;
wherein comparing the first color data with second color data corresponding to each piece of pixel information of the image to be identified to determine target pixel information comprises:
obtaining a Euclidean distance between the first color data and the RGB image data corresponding to each piece of pixel information; and
determining pixel information corresponding to the Euclidean distance greater than a preset distance as the target pixel information.

17. The electronic device of claim 15, wherein the processor is configured to call computer instructions to implement operations of:
determining whether the number of pieces of target pixel information is greater than a preset number;
obtaining averaged color values of each piece of target pixel information and determining the averaged color values as the target color data, in response to determining that the number of pieces of target pixel information is greater than the preset number; and
determining the first color data as the target color data in response to determining that the number of pieces of target pixel information is not greater than the preset number.

18. The electronic device of claim 14, wherein the processor is further configured to call computer instructions to implement operations of:
calculating color differences between the target color data and the preset display style data; and
determining a piece of preset display style data corresponding to a minimal color difference as the target display style data by comparing the color differences.

19. The electronic device of claim 18, wherein the processor is further configured to call computer instructions to implement operations of:
calculating Euclidean distances between RGB image data contained in the target color data and RGB image data corresponding to different colorway styles of cascading style sheets;
wherein determining the piece of preset display style data corresponding to the minimal color difference as the target display style data by comparing the color differences comprises:
determining a cascading style sheet corresponding to a minimal Euclidean distance as the target display style data by comparing the Euclidean distances.

20. The electronic device of claim 14, wherein the processor is further configured to call computer instructions to implement operations of:
generating thematic color by parsing the target display style data through a preset script framework;
generating the target thematic color by adjusting the thematic color based on a current ambient light intensity; and
rendering the display information based on the target thematic color, and displaying rendered display information.
